# EUROPEAN PATENT SPECIFICATION

(11) **EP 2 946 676 B1**
(45) Date of publication and mention of the grant of the patent: **06.09.2017**
(21) Application number: 14169409.1
(22) Date of filing: 22.05.2014
(51) Int. Cl.: A23L 3/36, A23L 3/50, F26B 3/08, F25D 13/06, F28C 3/16

(54) **Apparatus for and method of temperature treatment of a product**
Vorrichtung und Verfahren zur Temperaturbehandlung eines Produkts
Appareil et procédé de traitement thermique d'un produit

(43) Date of publication of application: 25.11.2015
(73) Proprietor: John Bean Technologies AB, 251 09 Helsingborg (SE)
(72) Inventor: Ohlsson, Håkan, 244 65 Furulund (SE)
(74) Representative: Awapatent AB

(56) References cited:
- EP-A1- 2 261 583
- EP-A2- 1 707 910
- US-A- 3 345 180
- US-A- 3 718 024
- US-A- 4 251 925

## Description

### Technical field of the invention

The invention relates to an apparatus for temperature treatment of a bed of products, the apparatus comprising a product transportation arrangement for transporting said bed of products along a product path in said apparatus, a gas temperature treatment arrangement for altering the temperature of a gas being circulated through the gas temperature treatment arrangement, and a gas circulation arrangement for circulating said gas in said apparatus, through said gas temperature treatment arrangement and through said bed of products. The gas circulation arrangement is adapted to provide a flow of said gas from beneath said bed of products and through said bed of products such that a fluidised bed of products is formed.

The invention also relates to a method of temperature treatment of a bed of products, comprising transporting said bed of products along a product path in a product transportation arrangement, circulating gas through said bed of products, as the bed of products is transported along said product path, by a gas circulation arrangement, altering the temperature of said gas by circulating said gas through a temperature treatment arrangement, and circulating a flow of said gas from beneath said products and through said bed of products such that a fluidised bed of products is formed.

### Background technology

In the food industry, it is often desirable to freeze products, such as vegetables, fruits, berries and shellfish, as individual items. One way of accomplishing this is to supply the product to a trough which is provided with a foraminous bottom or foraminous conveyor belt through which a flow of refrigerated gas, such as air, is supplied such that the products will form a fluidised bed while being frozen. This kind of freezer is for some products associated with a problem that the products form lumps or the products stick to the trough sides or trough bottom. This is a problem that has been addressed in e.g. US 3,169,381, US 4,281,521 and WO 2005/073649.

US 3,169,381 discloses a freezer for freezing products in a fluidised bed. The fluidised bed is divided into different zones along a product path from a product inlet to a product outlet of the freezer. It is disclosed how the flow of cold air is supplied from a common main supply and that each zone is provided with a respective fan in order to be able to control the flow of air in respective zone. It is disclosed how there is supplied a greater quantity of cooled gas at the supply end than at other points, with an aim to supply a greater quantity of air to the newly supplied products require than to the products further downstream in the freezer. This document also discloses an air bypass at the supply end. A fraction of the air that has passed the product bed is re-circulated by a fan back to the supply end of the product bed without passing the cooling coil. This is said to reduce frost accumulation within the vessel.

US 4,281,521 discloses a freezer for freezing products in a fluidised bed on a conveyor. The conveyor is driven forwardly and is interrupted by at least one downward stepping movement, causing a thinning of the product bed and a rapid increase in air velocity to thus cool and to separate the food articles preventing them from freezing to one another. The food articles are thereafter subjected to deep bed mass fluidisation by blowing freezing air there through in a fluidised state. The freezer is divided into a first section for cooling the product and a second section deep freezing. The first section is provided with a cooling system basically comprising a cooling coil and a fan. The second section is provided with a cooling system basically comprising a cooling coil and a fan.

WO 2005/073649 discloses an apparatus for freezing products in a fluidised bed. The apparatus comprises air directing means arranged to direct a flow of air so that a bed formed of said products in a trough has a first fluidisation in a pre-cooling zone of the trough and a second fluidisation in a freezing zone of the trough downstream of the pre-cooling zone, wherein the second fluidisation is more vigorous than the first and so vigorous that freezing together of adjoining products is counteracted.

US 3,718,024 discloses an apparatus and method for the controlled cooling of steel rod. The apparatus includes two cooling sections in which a cooling medium comprising sand is provided in a fluidized bed for the cooling of the steel rod.

### Summary of the invention

It is an object of the invention to provide an apparatus which in a cost-effective and robust manner offer a possibility to address the problems associated with products forming lumps or products sticking to the apparatus.

It is also an object of the invention to provide a method which in a cost-effective and robust manner offer a possibility to address the problems associated with products forming lumps or products sticking to the apparatus in which the method is implemented.

According to one aspect the apparatus and method relates to an apparatus and method for freezing products. According to one aspect the apparatus and method relates to temperature treatment of food products. Especially the apparatus and method relates to freezing of food products. Examples of such a product are vegetables, fruits, berries and shellfish. The invention may also be used in heating or drying applications.

The above object has been achieved by an apparatus of the kind given in the introductory part, wherein the apparatus is provided with two, along the product path successively arranged, zones, wherein said gas temperature treatment arrangement is common to both zones and is associated with both zones such that gas circulated through said common gas temperature treatment arrangement is circulated through said bed of products in both zones, and wherein at least one of the zones is provided with a gas flow bypass arrangement, and wherein said gas flow bypass arrangement being adapted to allow a fraction of the gas to bypass the common gas temperature treatment arrangement and to rejoin with gas that has been circulated through the common gas temperature treatment arrangement before the gas is circulated through said bed of products in said gas flow bypass arrangement provided zone, the apparatus thereby being adapted to allow the temperature of gas circulated through said bed of products in said gas flow bypass arrangement provided zone to be controlled to be different from the temperature of gas circulated through said bed of products in the other of the two zones associated with the common gas temperature treatment arrangement.

By providing a gas flow bypass arrangement in one of the zones and to in this zone rejoin the gas flow from the gas flow bypass arrangement with the gas from the gas temperature treatment arrangement before the gas in this zone flows through the bed of products, it is possible to control the temperature in said zone without any need for changing the design of the gas temperature treatment arrangement nor introducing any need for any complicated control means of controlling the gas temperature arrangement. Similarly there is no need for changing the design of the gas circulation arrangement and no need for the introduction of any complicated control means of controlling the gas circulation arrangement. The provision of a gas flow bypass arrangement is especially useful in cases where the zones are associated with a common gas temperature treatment arrangement. With the inventive design the gas temperature treatment arrangement may be designed without having to consider the length (along the product path) of the zone in which the temperature of the gas is to be controlled or the length of the zone may be designed without having to consider the length of the gas temperature arrangement or arrangements in the apparatus.

This design makes it possible to address the problem of products forming lumps or the product sticking to the apparatus in a robust and cost-effective manner. By controlling the temperature of the gas in this manner in the different zones, it is possible, in e.g. freezing or cooling applications, to address the problem of the products forming lumps or the product sticking to the apparatus. In a freezing application it has been found that by providing an inlet zone, a zone in which the products are introduced into the apparatus, with said gas flow bypass arrangement it is possible to reduce the cooling effect in this inlet zone while still making it possible to maintain the flow of gas necessary to provide the fluidised bed of products in this inlet zone. Moreover, the inventive design allows for the possibility that the gas flow bypass arrangement may be closed (not allowing any gas to bypass the gas temperature treatment arrangement) in cases where the products does not have the tendency to stick to each other and thereby full temperature treatment effect may be provided along the full length.

The design also makes it possible to in a robust and cost-effective manner to control the temperature in a specific zone for other reasons. In some cases it may be useful to allow the bed of products to have a temperature coming closer to ambient temperature as the products comes in the vicinity of the product outlet where the products leave said apparatus. In such a case an outlet zone, a zone in which the products leave the apparatus, is provided with said gas flow bypass arrangement. In a heating or drying application there are also circumstances that make it useful to lower the heating effect in a specific zone. Rapid heating at the inlet or rapid cooling to ambient temperature after the outlet may e.g. cause products to crack, burst or shrink in an uncontrolled manner. In such cases it is possible to use the invention to control the temperature in an inlet zone, a zone in which the products are introduced into the apparatus, and/or an outlet zone, a zone in which the products leave the apparatus.

The invention may also be used to control the temperature of the gas in a more central zone within the apparatus, a zone not forming an inlet zone and not forming an outlet zone, and to thereby provide such a zone with a gas flow bypass arrangement. It may e.g. be useful to control the temperature in such a zone in order to influence the moisture content. It may also be useful to control the temperature in a zone where e.g. additional agitation, pulsating gas, a step in a conveyor or other means are provided for further improve breaking up of any lumps in the bed of products into individual products.

It may be noted that considering that there occurs a fluidisation of the bed of products, there will not in the bed of products be any distinct demarcation between the zones, rather there will be a transition area of limited length along the product path where the temperature of the gas flowing through the bed of products will vary from the temperature of the gas in the zone provided with the bypass to the temperature of the zone not provided with any bypass. Plates extending transverse to the product path and along the main flow direction may be provided in order to provide more distinct zones. The plates may e.g. form closed compartments completely separating the gas flow of the different zones. Alternatively, the plates may only to a certain degree separate the gas flow of the different zones and thereby form baffles giving an increased separation of the gas flow intended for the different zones.

By providing a sufficient flow of said gas from beneath said bed of products and through said bed of products, a fluidised bed of products is formed. When a bed of products is fluidised it begins to behave like a liquid. In a fluidised bed of products the individual products are subjected to a flow of gas from beneath such that the products at the bottom have a tendency to jump up and down or to levitate and to hit surrounding products in the bed of products. The flow of gas flows around the products at the bottom and affects products above such that they begin to jump or levitate and to hit surrounding products. The individual products moves around and continue to hit each other and to be affected by the flow of gas from beneath each product. The total result is that the bed of products begins to behave like a liquid. By controlling the flow of gas it is possible to influence the behaviour of the bed of products. With an increased flow of gas the bed of product typically behaves like a liquid with decreased viscosity. The fluidisation may be improved by pulsation of the flow of gas and/or by agitating the bed of products.

Different advantageous embodiments of the invention are disclosed in the dependent claims. It may be noted that the features disclosed in the dependent claims may individually be combined with the features of the independent claim or may be combined in different combinations with the features of the independent claim to form different advantageous embodiments. The advantages will be discussed in respect of respective feature.

Each of said two zones may be provided with a gas flow bypass arrangement, wherein a gas flow bypass arrangement of one of the zones is operable independently from a gas flow bypass arrangement of the other zone. This way it is possible to independently control the temperature of the gas in two different zones. According to one embodiment the two zones are the only zones of the apparatus. According another embodiment the apparatus comprises one or more further zones apart from said two zones. The one or more further zones may in turn be provided with a gas flow bypass arrangement. Above it has been discussed that the invention offers a possibility to design the gas temperature treatment arrangement independently of the division of the apparatus into zones. One set-up may e.g. be that one gas temperature treatment arrangement is associated with two zones and another gas temperature treatment arrangement is associated with one or more other zones. This may e.g. be in the form of two shorter zones (equal or different in length) along a first gas temperature treatment arrangement and a longer zone along a second gas temperature treatment arrangement of similar size and capacity as the first gas temperature treatment arrangement. A zone may also be associated with two gas temperature treatment arrangements. One set-up may be that the apparatus is provided with two gas temperature treatment arrangements each along half the length of the product path in the apparatus. In one alternative there is provided a short zone (with or without bypass) at one end of the apparatus, this zone being associated with a first gas temperature treatment arrangement, and the other zone (with or without bypass) is a longer zone being associated both with the first (i.e. the common) and the second gas temperature treatment arrangement. In one alternative there are provided three zones of along two gas temperature treatment arrangements, where the centre zone is associated with both gas temperature treatment arrangements. In such a case, one of the gas temperature treatment arrangements will be common for the first and second zone whereas the other gas temperature treatment arrangement will be common for the second and third zone.

The gas may be circulated in a flow having a main component transverse to the product path, and wherein the gas temperature treatment arrangement extends along the product path, and is, in a horizontal plane projection, positioned beside the product path. One advantage with this design is that the distance the gas flows may be kept short, i.e. unnecessary pressure drops may be kept at a minimum. Since the gas temperature treatment arrangement is positioned beside the product path, the risk of products falling into the gas temperature treatment arrangement or the risk of ice from the gas treatment arrangement falling into the product has been significantly reduced in a robust and efficient manner.

The gas flow may be directed and the apparatus may designed such that the gas in consecutive order is circulated through said bed of products, thereafter the gas is circulated through the gas temperature treatment arrangement, and thereafter the gas passes the gas circulation arrangement. One advantage of this is that in cooling or freezing applications, the gas is dried while passing the gas temperature treatment arrangement (e.g. so-called cooling battery) before reaching the gas circulation arrangement (e.g. a fan) thereby reducing the risk of frost building up on the fan which introduces imbalances which in turn could course a complete mechanical or electrical breakdown of the fan.

The gas flow bypass arrangement may be arranged such that gas from said gas flow bypass arrangement rejoins the gas from the gas temperature treatment arrangement in a direction having a component directed away from said gas circulation arrangement. One advantage of this is that in cooling or freezing application will moisture in the comparably moisture rich gas from the gas flow bypass arrangement be blown in a general direction away from the gas circulation arrangement (e.g. a fan) thereby reducing the risk of frost building up on the fan which introduces imbalances which in turn could course a complete mechanical or electrical breakdown of the fan.

The gas circulation arrangement may, in a direction transverse to the product path and in a horizontal plane projection, be positioned between the product transportation arrangement and the gas temperature treatment arrangement. This positioning reduces the risk of products or e.g. frost from the gas temperature treatment arrangement (when acting as a cooling battery in a cooling for freezing application) to fall into the gas circulation arrangement.

The gas circulation arrangement may in a vertical plane projection be positioned beneath the gas temperature treatment arrangement and beneath the product path of the product transportation arrangement. This makes it possible to design the apparatus with short flow paths, which reduces unnecessary pressure drops of the gas flow. By arranging the gas circulation arrangement beneath the product path, it is possible to blow gas from beneath through the bed of products with a minimum of pressure drop losses.

The gas flow bypass arrangement may be arranged such that gas from said gas flow bypass arrangement rejoins the gas from the gas temperature treatment arrangement in a direction having a component directed along gravity. One advantage of this is that in cooling or freezing application will moisture in the comparably moisture rich gas from the gas flow bypass arrangement be blown in a direction downwardly thereby making use of gravity to separate moisture from the gas thereby reducing the risk of frost building up on the fan which introduces imbalances which in turn could course a complete mechanical or electrical breakdown of the fan.

The gas flow bypass arrangement may be arranged such that gas from said gas flow bypass arrangement rejoins the gas from the gas temperature treatment arrangement in a direction having a component, preferably a main component, being on one hand transverse to a main flow direction of the gas from the gas temperature treatment arrangement and on the other hand transverse to the product path. One advantage of this is that it promotes mixing of gas from the gas flow bypass arrangement with the gas from the gas temperature treatment arrangement, while reducing mixing of gas intended for one zone with gas intended for a neighbouring zone.

As indicated above, one preferred application of use of the apparatus is cooling of products in said bed of products, preferably cooling of food products, and most preferred freezing of food products.

The above mentioned object has been achieved by a method of the kind given in the introductory part, wherein the method further comprises; providing two, along the product path successively arranged, zones; associating both zones with a common gas temperature treatment arrangement such that gas circulated through said common gas temperature treatment arrangement will be circulated through said bed of products in both zones, and providing at least one of the zones with a gas flow bypass arrangement; arranging said gas flow bypass arrangement such that it allows a fraction of said gas to bypass the gas temperature treatment arrangement and to rejoin with gas that has been circulated through said gas temperature treatment arrangement before the gas is circulated through said bed of products in said gas flow bypass arrangement provided zone, the method thereby allowing the temperature of gas circulated through said bed of products in said gas flow bypass arrangement provided zone to be controlled to be different from the temperature of gas circulated through said bed of products in the other of the two zones associated with said common gas temperature treatment arrangement.

By providing a gas flow bypass arrangement in one of the zones and to in this zone rejoin the gas flow from the gas flow bypass arrangement with the gas from the gas temperature treatment arrangement before the gas in this zone flows through the bed of products, it is possible to control the temperature in said zone without any need for changing the design of the gas temperature treatment arrangement nor introducing any need for any complicated control means of controlling the gas temperature arrangement. Similarly there is no need for changing the design of the gas circulation arrangement and no need for the introduction of any complicated control means of controlling the gas circulation arrangement. The provision of a gas flow bypass arrangement is especially useful in cases where the zones are associated with a common gas temperature treatment arrangement. With the inventive design the gas temperature treatment arrangement may be designed without having to consider the length (along the product path) of the zone in which the temperature of the gas is to be controlled or the length of the zone may be designed without having to consider the length of the gas temperature arrangement or arrangements in the apparatus. Further advantages with the inventive method have been discussed in detail in relation to features also being present in the independent claim related to the apparatus.

Different advantageous embodiments of the invention are disclosed in the dependent claims. It may be noted that the features disclosed in the dependent claims may individually be combined with the features of the independent claim or may be combined in different combinations with the features of the independent claim to form different advantageous embodiments. The advantages of respective feature in combination with the features of the independent claim have been discussed in detail in respect of their application in the apparatus and reference is made to that discussion.

### Brief description of the drawings

The invention will by way of example be described in more detail with reference to the appended schematic drawings, which shows a presently preferred embodiment of the invention.
Fig 1 is a top sectional view along the line I-I in fig 2.
Fig 2 is a side sectional view along the lines II-II in fig 1 and fig 4.
Fig 3 is a side sectional view along the lines III-III in fig 1 and fig 4.
Fig 4 is a top sectional view along the line IV-IV in fig 2 showing the bottom portion of the apparatus and with contour lines of parts above the cross-section indicated with dashed lines.

### Detailed description of preferred embodiments

The apparatus 1 is designed for temperature treatment of a bed B of products 8. The apparatus 1 comprises a housing 2 with two sidewalls 3a-b, two end walls 4a-b, a floor 6 and a ceiling 7. One of the end walls 4a is provided with an inlet opening 5a and the other end wall 4b is provided with an outlet opening 5b. The product 8 which is intended to be temperature treated is fed into the apparatus 1 via the inlet opening 5a, is transported through the apparatus 1 along a product path P, and is after temperature treatment removed from the apparatus 1 via the outlet opening 5b. The walls 3a-b, 4a-b, the floor 6 and the ceiling 7 of the housing 2 are preferably insulated to minimise undesired heat transfer between the inside of the housing 2 and the outside of the housing 2. Most commonly the temperature of the outside of the housing 2 is ambient temperature, i.e. the temperature prevailing in the factory building and the inside of the housing 2 is significantly cooler in e.g. cooling or freezing applications or significantly hotter in e.g. heating, baking or drying applications.

Inside the housing 2, the apparatus 1 further comprises a gas temperature treatment arrangement 10, a product transportation arrangement 20, and a gas circulation arrangement 30.

The gas temperature treatment arrangement 10 is adapted to alter the temperature of gas being circulated in a flow F2 of gas through the gas temperature treatment arrangement 10. In the disclosed preferred embodiment, the gas temperature treatment arrangement 10 is a so-called cooling battery for cooling the gas for cooling or freezing of the products 8. The cooling battery 10 is basically a heat exchanger where the gas is circulated past or through a plurality of cooler bodies in the cooling battery 10, such that the air is cooler after the cooling battery than before the cooling battery. One common design is that the cooler bodies are a tubing system with fins attached to the tubing system and where the tubing system is designed as an evaporator for a cooling media circulated in the tubing system. The evaporation of the cooling media draws heat energy from the gas circulated through or past the cooling battery.

In some cases the gas temperature treatment arrangement 10 is a well-defined more or less closed compartment with walls distinctly defining a flow path through the arrangement 10. In other cases the gas temperature treatment arrangement 10 does not comprise any compartment forming walls but are basically a set of heat exchange bodies located within in a geometric volume in space, and circulation of the gas through the gas temperature treatment arrangement relates to a circulation of gas through this geometric volume in space.

The product transportation arrangement 20 is adapted to transport a fluidised bed B of products 8 through the apparatus along the product path P.

The gas circulation arrangement 30 is adapted to circulate gas in the apparatus 1 through the gas temperature treatment arrangement 20 and upwardly through said bed B of products 8. The gas circulation arrangement 30 is adapted to provide a flow F1 of said gas from beneath the bed B of products 8 and through said bed B of products 8 such that a fluidised bed B of products 8 is formed.

In one embodiment the product transportation arrangement 20 is a trough 21, with side walls 22, a bottom 23 and end walls 24a-b. The end wall 24b at the outlet opening 5b is lower than the side walls 22, thereby allowing the fluidised bed B to flow as a liquid in the trough 21 towards and over the end wall 24b for further transport by an adjoining apparatus. The bottom 23 of the trough 21 is foraminous, e.g. being formed of one or more plates provided with a plurality of through-going holes, thereby allowing gas to be circulated through the bottom 23 of the trough 21 and through the bed B of product 8 in the trough 21. The trough may be sloping downwardly, forwardly along the product path P in the direction P in which the products 8 in the bed B of products 8 is to be transported in order to facilitate the transport of the fluidised bed B of products 8.

In another embodiment the product transportation arrangement 20 is provided with a conveyor, such as a belt conveyor, forming the bottom 23 of the trough 21. The conveyor, e.g. the belt, is foraminous, thereby allowing gas to be circulated through the belt and through the bed B of products 8 on the conveyor. Such a design is e.g. disclosed in WO 2005/073649. The conveyor, e.g. the belt, may have its side edges folded upwardly to partly of fully form the side walls 22 of the trough 21.

The complete trough 21 or at least the bottom 23, e.g. formed of one or more plates, is agitated back and forth along the product path P. Also in the embodiment with the conveyor, e.g. a belt conveyor, the conveyor is agitated back and forth during its forward movement. The part of the conveyor belt in contact with the products 8 is moved in the desired transport direction while being agitated back and forth along the transport direction. Thus, the conveyor belt is agitated in an asymmetric manner such that there is an improved separation of the products and an improved fluidisation while there is still a resulting movement, of the part of the conveyor belt in contact with the products 8, in the direction of the desired transport direction of the products.

The upwardly directed flow of gas flowing through the bottom 23 may be directed inclined in the direction in which the products 8 in the product bed B are to be transported. Such a flow of gas may be said to function also as a transportation arrangement 20. The flow of gas may be pulsated such that the flow of gas through the bed B of products 8 varies in short time periods in order to improve the fluidisation of the bed B of products 8.

It may especially be noted that the product transportation arrangement 20 need not be or include any member which explicitly transports the products 8 along the product path P. Rather the product transportation arrangement 20 may in some cases, such as when the transportation arrangement 20 is formed as a trough 21, be considered more as an arrangement, which by its design provides physical boundaries for the fluidised bed B of products 8 to flow as a liquid along the product path P in the desired transportation direction.

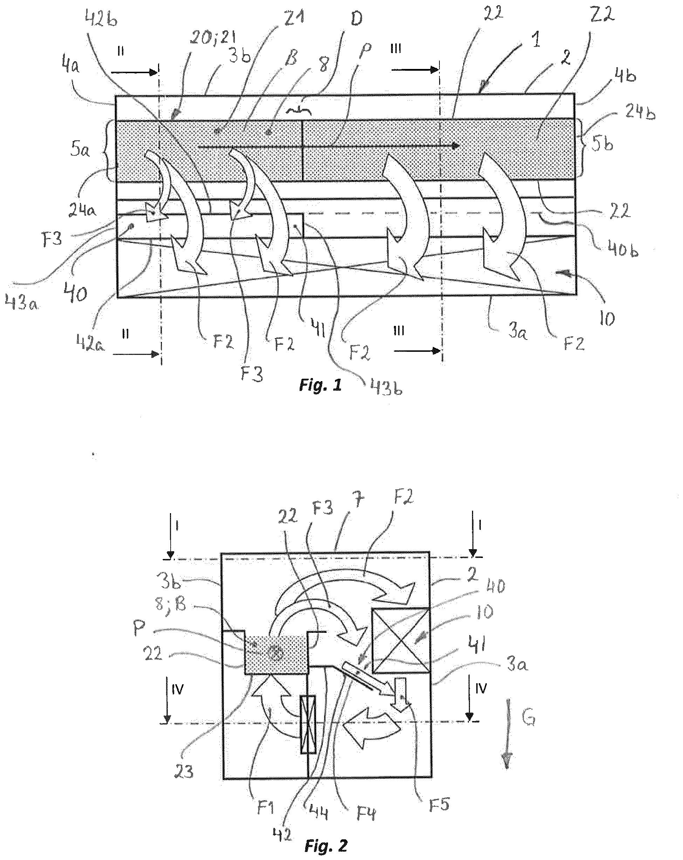

As is shown in fig 1 the apparatus 1 is provided with two zones Z1 and Z2. The zones Z1 and Z2 are successively arranged along the product path. Zone Z1 forms an inlet zone and zone Z2 forms an outlet zone. As is shown in fig 1 there is a common gas temperature treatment arrangement 10 associated with both zones Z1 and Z2 such that gas circulated through the common gas temperature treatment arrangement 10 is circulated through said bed of products in both zones Z1 and Z2.

Zone Z1 is provided with a gas flow bypass arrangement 40. The gas flow bypass arrangement 40 in zone Z1 is adapted to allow a fraction F3 of the gas to bypass the common gas temperature treatment arrangement 10 and to rejoin with the fraction F2 of gas that has been circulated through the common gas temperature treatment arrangement 10 before the gas is circulated in a flow F1 through the bed B of products 8 in zone Z1. By providing a gas flow bypass arrangement 40 in zone Z1 it is possible to control the temperature of gas circulated through the bed B of products 8 in zone Z1 to be different from the temperature of gas circulated through said bed B of products 8 in zone 2 associated with the common gas temperature treatment arrangement. The gas circulation in zone Z1 is shown in the cross-sectional view of fig 2.

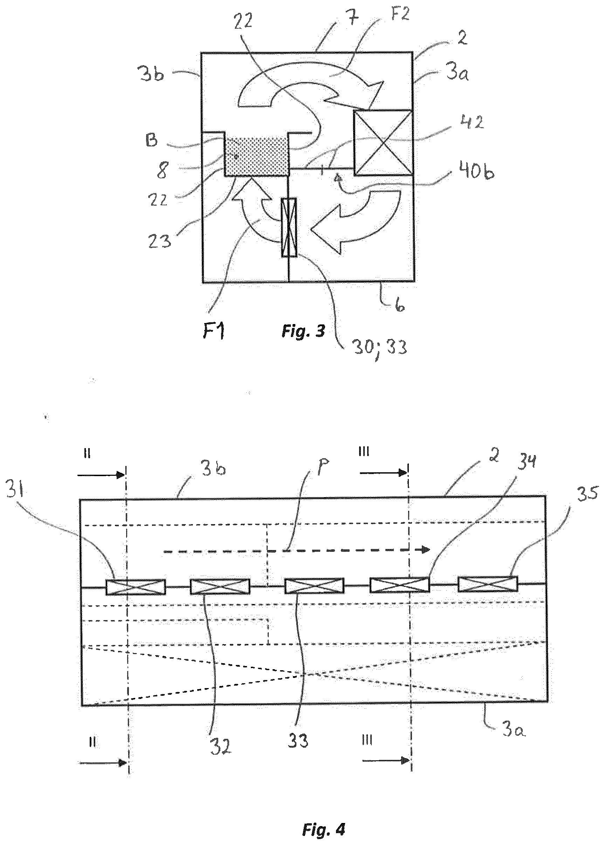

In zone Z2 there is no gas flow bypass arrangement. In zone Z2, the gas, which has temperature treated the products 8, is circulated through the gas temperature treatment arrangement 10 and to the products 8 again. The gas circulation in zone Z2 is shown in the cross-sectional view of fig 3.

The products 8 in zone Z2 is subjected to a temperature treatment determined by the full temperature effect of the common gas temperature treatment arrangement 10 on the gas. The products 8 in zone Z1 is subjected to a temperature treatment which is lesser than the temperature treatment in zone Z2. In a cooling or freezing application the gas circulated through the bed B of products 8 is cooler in zone Z2, where there is no gas flow bypass arrangement 40, than the gas circulated through the bed B of products 8 in zone Z1, where there is a gas flow bypass arrangement 40.

The gas circulation arrangement 30 is formed of an array of fans 31-35 successively arranged along the product path P. In this embodiment, the zone Z1 being provided with a gas flow bypass arrangement 40 is associated with two fans 31 and 32. In applications where it is preferred that the demarcation D between the zones Z1 and Z2 is comparably distinct, it is preferred that the zone Z1 being provided with a gas flow bypass arrangement 40 is associated with an integer number of fans. Thereby the gas flow intended for the different zones Z1 and Z2 will not be mixed in the way it would be by a joint flow intended for different zones Z1 and Z2 through a common fan. In applications where it is preferred that the demarcation D between the zones is comparably smooth, it is preferred that the demarcation zone is associated with a fan or fan arrangement drawing air intended for both zones. With reference to fig 1, this latter would e.g. be achieved by having the gas flow bypass arrangement 40 to have an extension along the product path P ending half-way through the extension of the second fan 32 along the product path P.

In accordance with an alternative embodiment is each of the two zones Z1 and Z2 provided with a gas flow bypass arrangement 40, 40b. In such an embodiment, the gas flow bypass arrangement 40 of zone Z1 is operable independently from the gas flow bypass arrangement 40b of zone Z2. This embodiment with a gas flow bypass arrangement 40b also in zone Z2 is indicated by the dashed line denoted 40b. If zone Z2 is provided with a gas flow bypass arrangement 40b and it is open, the gas flow will be as indicated in fig 2 also in zone Z2.

In one embodiment the gas flow bypass arrangement 40 is an opening 41 in a wall section 42 otherwise closing the distance between the product transportation arrangement 20 and the gas temperature treatment arrangement 10. In the disclosed embodiment the opening has a rectangular shape with a longitudinal extension along the product path P with longitudinally extending side edges 42a-b and transversely extending end edges 43a-b. The side edges 42a-b and end edges 43a-b need not be straight and distinctly separated edges as in the rectangular shape. They may be curved and they may be smoothly adjoining each other. The shapes may e.g. be circular or ellipsoid. It is also conceivable that the opening 41 is divided into several openings successively arranged along the product path P.

The gas flow bypass arrangement 40 comprises a hatch 44 which is operable between a closed state and an open state. In the closed state, the hatch 44 closes the opening 41 such that the gas flow bypass arrangement 40 is closed. In this state there is no gas flow through the gas flow bypass arrangement, i.e. the flow is as illustrated in fig 3 also in zone Z1 which is provided with the gas flow bypass arrangement 40. In the open state, the hatch 44 does not close the opening 41 and the gas flow bypass arrangement 40 is open. In this state a fraction F3 of the gas flows through the gas flow bypass arrangement 40, i.e. the flow is as illustrated in fig 2 in zone Z1 which is provided with the gas flow bypass arrangement. The hatch 44 is continuously or step-wise operable into one or a plurality of states between said open and closed states, thereby allowing the size of the fraction F3 through the gas flow bypass arrangement 40 and the size of the remaining fraction F2 through the gas temperature treatment arrangement 10 to be varied.

In one embodiment the gas flow bypass arrangement is at least operable between a first state and a second state, wherein the first state allows a greater fraction of the gas to flow via the gas flow bypass arrangement compared to the second state, wherein the gas flow bypass arrangement preferably is continuously or step-wise operable into one or a plurality of states between said first and second states. The first state in this embodiment may be the most open state the gas flow bypass arrangement is capable of reaching. Alternatively the gas flow bypass arrangement may be arranged to be able to reach an even more open state than the first state e.g. by removing any throttle or the like providing the operability between the first and second state. Similarly the second state may be a fully closed state. Alternatively the second state may be a state where the gas flow bypass arrangement is still partly open. From such a partly open second state it may be possible to fully close the gas flow bypass arrangement e.g. by providing a separate member closing the gas flow bypass arrangement or by manually change the position of any throttle of the like providing the operability between the first and second state.

The gas is circulated in a flow having a main component transverse to the product path P, and wherein the gas temperature treatment arrangement 10 extends along the product path P, and is, in a horizontal plane projection (a plane as shown in fig 1), positioned beside the product transportation arrangement 20. Thus, the gas flows in an essentially circular flow from the product transportation arrangement 20 to the gas temperature treatment arrangement 10 and back to the product transportation arrangement 20. Thus, the flow has a main component in the plane shown in fig 2 and fig 3, i.e. a main component in a plane being transverse to the product path P.

As shown in the figs, the gas flow is directed and the apparatus is designed such that the gas in consecutive order is circulated through said bed B of products 8, thereafter the gas is circulated through the gas temperature treatment arrangement 10, and thereafter the gas passes the gas circulation arrangement 30. Thereafter the gas is circulated through the bed B of products 8.

As is shown in fig 2, the gas flow bypass arrangement 40 is arranged such that gas F4 from said gas flow bypass arrangement 40 rejoins the gas F5 from the gas temperature treatment arrangement 10 in a direction (indicated by the arrow F4) having a component directed away from said gas circulation arrangement 30 as viewed in a plane being transverse to the product path P. As shown in fig 2, the gas F4 from said gas flow bypass arrangement 40 rejoins the gas F5 from the gas temperature treatment arrangement 10 in a direction (indicated by the arrow F4) in the preferred embodiment having a main component directed away from said gas circulation arrangement 30 as viewed in a plane being transverse to the product path P.

As shown in fig 2, the gas flow bypass arrangement 40 is arranged such that gas F3 from said gas flow bypass arrangement 40 rejoins the gas F4 from the gas temperature treatment arrangement 10 in a direction F4 having a component being transverse to a main flow direction F5 of the gas from the gas temperature treatment arrangement 10 and transverse to the product path P. As shown in fig 2, the gas flow bypass arrangement 40 is arranged such that gas F3 from said gas flow bypass arrangement 40 rejoins the gas F4 from the gas temperature treatment arrangement 10 in a direction F4 in the preferred embodiment having a main component being transverse to a main flow direction F5 of the gas from the gas temperature treatment arrangement 10 and transverse to the product path P. As shown in fig 2, the gas flow bypass arrangement 40 is arranged such that gas F4 from said gas flow bypass arrangement 40 rejoins the gas F5 from the gas temperature treatment arrangement 10 in a direction F4 having a component directed along gravity G.

As shown in figs 2 and 3, the fans 31-35 of the gas circulation arrangement 30 are, in a direction transverse to the product path P and in a horizontal plane projection (the plane of fig 4) positioned between the product transportation arrangement 20 and the gas temperature treatment arrangement 10. As shown in figs 2 and 3, the fans 31-35 of the gas circulation arrangement 30 are in a vertical plane projection (the plane of figs 2 and 3) positioned beneath the gas temperature treatment arrangement 10 and beneath the product path P of the product transportation arrangement 20. However, as indicated above concerning the positioning in the horizontal plane, the fans 31-35 are not located directly beneath the gas temperature treatment arrangement 10 and not directly beneath the product path P of the product transportation arrangement 20 but are at a lower level and in a horizontal direction between the gas temperature treatment arrangement 10 and the product path P of the product transportation arrangement 20.

The fraction of flow (in volume/time unit) of gas F4 through the gas flow bypass arrangement 40 may be between 1% and 90% of the total flow F4+F5 of gas which has passed the gas flow bypass arrangement 40 and the gas temperature treatment arrangement 10 in the zone Z1 provided with the gas flow bypass arrangement 40.

By regulating the fraction of flow of gas F4 through the gas flow bypass arrangement 40 the temperature of the flow F1 of gas from beneath the bed B of products 8 and through said bed B of products 8 may be varied. The fraction of flow of gas F4 through the gas flow bypass arrangement 40 may be controlled by operating the hatch 44 into one of the plurality of states between the open and closed states. The operating of the hatch 44 into one of the plurality of states between the open and closed states may be controlled by means of a temperature regulator. In the preferred embodiment the gas is air. Preferably the air has been filtered or otherwise cleaned to minimize introduction of contaminants.

It is contemplated that there are numerous modifications of the embodiments described herein, which are still within the scope of the invention as defined by the appended claims.

The preferred embodiment has e.g. been discussed in respect of a cooling or freezing application where the gas temperature treatment arrangement 10 is a so-called cooling battery for cooling the gas. The invention is e.g. also applicable for heating or drying applications where the gas temperature treatment arrangement will be heating the gas.

It is also contemplated that there are a plurality of zones each provided with an independently controlled gas flow bypass arrangement such that the temperature of the gas may be controlled to be different in respective zone compared to the temperature of the gas in the other zones provided with gas flow bypass arrangements. The zone(s) provided with gas flow bypass arrangement may be the inlet zone as in the disclosed embodiment. Alternatively or as a complement, the zone provided with a gas flow bypass arrangement may be an outlet zone. Yet alternatively it may be a central zone not forming an inlet or outlet zone. A plurality of zones provided with independently operable gas flow bypass arrangements may also be used to provide a controlled temperature profile along the product path.

## Claims

1. An apparatus (1) for temperature treatment of a bed (B) of products (8), the apparatus (1) comprising:
a product transportation arrangement (20) for transporting said bed (B) of products (8) along a product path (P) in said apparatus (1),
a gas temperature treatment arrangement (10) for altering the temperature of a gas being circulated through the gas temperature treatment arrangement (10),
a gas circulation arrangement (30) for circulating said gas in said apparatus (1), through said gas temperature treatment arrangement (10) and through said bed (B) of products (8),
wherein the gas circulation arrangement (30) is adapted to provide a flow (F1) of said gas from beneath said bed (B) of products (8) and through said bed (B) of products (8) such that a fluidised bed (B) of products (8) is formed,
wherein the apparatus (1) is provided with two successively arranged zones (Z1, Z2) along the product path (P),
wherein said gas temperature treatment arrangement (10) is common to both zones (Z1, Z2) and is associated with both zones (Z1, Z2) such that gas circulated through said common gas temperature treatment arrangement (10) is circulated through said bed (B) of products (8) in both zones (Z1, Z2), and wherein at least one of the zones (Z1) is provided with a gas flow bypass arrangement (40), and
wherein said gas flow bypass arrangement (40) is adapted to allow a fraction (F3; F4) of the gas to bypass the common gas temperature treatment arrangement (10) and to rejoin with gas (F5) that has been circulated through the common gas temperature treatment arrangement (10) before the gas is circulated through said bed (B) of products (8) in said gas flow bypass arrangement (40) provided zone (Z1).

2. Apparatus (1) according to claim 1, wherein each of said two zones (Z1, Z2) is provided with a gas flow bypass arrangement (40, 40b), wherein a gas flow bypass arrangement (40) of one of the zones (Z1) is operable independently from a gas flow bypass arrangement (40b) of the other zone (Z2).

3. Apparatus (1) according to claim 1 or 2, wherein the gas is circulated in a flow (F1, F2, F3, F4, F5) having a main component transverse to the product path (P), and wherein the gas temperature treatment arrangement (10) extends along the product path (P), and is, in a horizontal plane projection, positioned beside the product transportation arrangement (20).

4. Apparatus (1) according to one or more of claims 1-3, wherein the gas flow (F1, F2, F3, F4, F5) is directed and the apparatus (1) is designed such that the gas in consecutive order is circulated through said bed (B) of products (8), thereafter the gas is circulated through the gas temperature treatment arrangement (10), and thereafter the gas passes the gas circulation arrangement (30).

5. Apparatus (1) according to one or more of claims 1-4, wherein the gas flow bypass arrangement (40) is arranged such that gas (F4) from said gas flow bypass arrangement (40) rejoins the gas (F5) from the gas temperature treatment arrangement (10) in a direction (F4) having a component directed away from said gas circulation arrangement (30).

6. Apparatus (1) according to one or more of claims 1-5, wherein the gas circulation arrangement (30) is, in a direction transverse to the product path (P) and in a horizontal plane projection, positioned between the product transportation arrangement (20) and the gas temperature treatment arrangement (10).

7. Apparatus (1) according to one or more of claims 1-6, wherein the gas circulation arrangement (30) is in a vertical plane projection positioned beneath the gas temperature treatment arrangement (10) and beneath the product path (P) of the product transportation arrangement (20).

8. Apparatus (1) according to one or more of claims 1-7, wherein the gas flow bypass arrangement (40) is arranged such that gas (F4) from said gas flow bypass arrangement (40) rejoins the gas (F5) from the gas temperature treatment arrangement (10) in a direction (F4) having a component directed along gravity (G).

9. Apparatus (1) according to one or more of claims 1-8, wherein the gas flow bypass arrangement (40) is arranged such that gas (F4) from said gas flow bypass arrangement (40) rejoins the gas (F5) from the gas temperature treatment arrangement (10) in a direction (F4) having a component, preferably a main component, being transverse to a main flow direction (F5) of the gas (F5) from the gas temperature treatment arrangement (10) and transverse to the product path (P).

10. Apparatus according to one or more of claims 1-9, wherein the apparatus is adapted for cooling of products (8) in said bed (B) of products (8), preferably cooling of food products (8), and most preferably freezing of food products (8).

11. Method of temperature treatment of a bed (B) of products (8), comprising:
transporting said bed (B) of products (8) along a product path (P) in a product transportation arrangement (20),
circulating gas through said bed (B) of products (8), as the bed (B) of products (8) is transported along said product path (P), by a gas circulation arrangement (30),
altering the temperature of said gas by circulating said gas through a temperature treatment arrangement (10),
circulating a flow (F1) of said gas from beneath said products (8) and through said bed (B) of products (8) such that a fluidised bed (B) of products (8) is formed,
providing two successively arranged zones (Z1, Z2) along the product path (P),
associating both zones (Z1, Z2) with a common gas temperature treatment arrangement (10) such that gas circulated through said common gas temperature treatment arrangement (10) is circulated through said bed (B) of products (8) in both zones (Z1, Z2), and providing at least one of the zones (Z1) with a gas flow bypass arrangement (40), and
arranging said gas flow bypass arrangement (40) such that it allows a fraction (F3; F4) of said gas to bypass the gas temperature treatment arrangement (10) and to rejoin with gas (F5) that has been circulated through said gas temperature treatment arrangement (10) before the gas is circulated through said bed (B) of products (8) in said gas flow bypass arrangement (40) provided zone (Z1).

12. Method according to claim 11, the method further comprising providing each of the two zones (Z1, Z2) with a gas flow bypass arrangement (40, 40b), and allowing a gas flow bypass arrangement (40) of one of the zones (Z1) to be operable independently from a gas flow bypass arrangement (40b) of the other zone (Z2).

13. Method according to claim 11 or 12, wherein the gas flows such that the gas in consecutive order is circulated through said bed (B) of products (8), thereafter the gas is circulated through the gas temperature treatment arrangement (10), and thereafter the gas passes the gas circulation arrangement (30).

14. Method according to one or more of claims 11-13, wherein gas (F4) from said gas flow bypass arrangement (40) rejoins the gas (F5) from the gas temperature treatment arrangement (10) in a direction having a component, preferably a main component, being transverse to a main flow direction (F5) of the gas from the gas temperature treatment arrangement (10).

15. Method according to one or more of claims 11-14, wherein the gas flow bypass arrangement (40) is arranged such that gas from said gas flow bypass arrangement (40) rejoins the gas (F5) from the gas temperature treatment arrangement (10) in a direction (F4) having a component directed away from said gas circulation arrangement (30), and preferably in a direction (F4) having a component directed along gravity (G).

## Patentansprüche

1. Vorrichtung (1) zur Temperaturbehandlung eines Bettes (B) von Produkten (8), wobei die Vorrichtung (1) umfasst:
eine Produkttransportanordnung (20) zum Transportieren des Bettes (B) von Produkten (8) entlang eines Produktpfads (P) in der Vorrichtung (1),
eine Gastemperaturbehandlungsvorrichtung (10) zum Verändern der Temperatur eines Gases, das durch die Gastemperaturbehandlungsanordnung (10) zirkuliert wird,
eine Gaszirkulationsanordnung (30) zum Zirkulieren des Gases in der Vorrichtung (1), durch die Gastemperaturbehandlungsanordnung (10) und durch das Bett (B) von Produkten (8),
worin die Gaszirkulationsanordnung (30) dafür ausgelegt ist, einen Fluss (F1) des Gases von unter dem Bett (B) von Produkten (8) und durch das Bett (B) von Produkten (8) derart bereitzustellen, dass ein fluidisiertes Bett (B) von Produkten (8) gebildet wird,
worin die Vorrichtung (1) mit zwei aufeinanderfolgend angeordneten Zonen (Z1, Z2) entlang des Produktpfads (P) bereitgestellt wird,
worin die Gastemperaturbehandlungsanordnung (10) gemeinsam für beide Zonen (Z1, Z2) ist und beiden Zonen (Z1, Z2) derart zugeordnet ist, dass durch die gemeinsame Gastemperaturbehandlungsanordnung (10) zirkuliertes Gas durch das Bett (B) von Produkten (8) in beiden Zonen (Z1, Z2) zirkuliert wird, und worin mindestens eine der Zonen (Z1) mit einer Gasflussumführungsleitungsanordnung (40) bereitgestellt wird, und
worin die Gasflussumführungsleitungsanordnung (40) dafür ausgelegt ist, zuzulassen, dass ein Bruchteil (F3; F4) des Gases um die gemeinsame Gastemperaturbehandlungsanordnung (10) umgeführt wird und wieder mit dem Gas (F5), das durch die gemeinsame Gastemperaturbehandlungsanordnung (10) zirkuliert wurde, zusammengeführt wird bevor das Gas durch das Bett (B) von Produkten (8) in der Gasflussumführungsleitungsanordnung (40), die in Zone (Z1) bereitgestellt wird, zirkuliert wird.

2. Vorrichtung (1) nach Anspruch 1, worin jede der beiden Zonen (Z1, Z2) mit einer Gasflussumführungsleitungsanordnung (40, 40b) bereitgestellt wird, worin eine Gasflussumführungsleitungsanordnung (40) einer der Zonen (Z1) unabhängig von einer Gasflussumführungsleitungsanordnung (40b) der anderen Zone (Z2) betreibbar ist.

3. Vorrichtung (1) nach Anspruch 1 oder 2, worin das Gas in einem Fluss (F1, F2, F3, F4, F5), der eine Hauptkomponente transversal zu dem Produktpfad (P) aufweist, zirkuliert wird, und worin die Gastemperaturbehandlungsanordnung (10) sich entlang des Produktpfads (P) erstreckt und in einer horizontalen Ebenenprojektion neben der Produkttransportanordnung (20) angeordnet ist.

4. Vorrichtung (1) nach einem oder mehreren der Ansprüche 1 bis 3, worin der Gasfluss (F1, F2, F3, F4, F5) derart geleitet wird und die Vorrichtung (1) derart entworfen ist, dass das Gas in Aufeinanderfolge durch das Bett (B) von Produkten (8) zirkuliert wird, woraufhin das Gas durch die Gastemperaturbehandlungsanordnung (10) zirkuliert wird und danach das Gas durch die Gaszirkulationsanordnung (30) strömt.

5. Vorrichtung (1) nach einem oder mehreren der Ansprüche 1 bis 4, worin die Gasflussumführungsleitungsanordnung (40) derart angeordnet ist, dass das Gas (F4) von der Gasflussumführungsleitungsanordnung (40) wieder mit dem Gas (F5) von der Gastemperaturbehandlungsanordnung (10) in einer Richtung (F4) zusammengeführt wird, die eine Komponente aufweist, die von der Gaszirkulationsanordnung (30) fort gerichtet ist.

6. Vorrichtung (1) nach einem oder mehreren der Ansprüche 1 bis 5, worin die Gaszirkulationsanordnung (30) in einer Richtung transversal zu dem Produktpfad (P) und in einer horizontalen Ebenenprojektion zwischen der Produkttransportanordnung (20) und der Gastemperaturbehandlungsanordnung (10) angeordnet ist.

7. Vorrichtung (1) nach einem oder mehreren der Ansprüche 1 bis 6, worin die Gaszirkulationsanordnung (30) in einer vertikalen Ebenenprojektion unter der Gastemperaturbehandlungsanordnung (10) und unter dem Produktpfad (P) der Produkttransportanordnung (20) angeordnet ist.

8. Vorrichtung (1) nach einem oder mehreren der Ansprüche 1 bis 7, worin die Gasflussumführungsleitungsanordnung (40) derart angeordnet ist, dass Gas (F4) von der Gasflussumführungsleitungsanordnung (40) wieder mit dem Gas (F5) von der Gastemperaturbehandlungsanordnung (10) in einer Richtung (F4) zusammengeführt wird, die eine Komponente aufweist, die entlang der Schwerkraft (G) gerichtet ist.

9. Vorrichtung (1) nach einem oder mehreren der Ansprüche 1 bis 8, worin die Gasflussumführungsleitungsanordnung (40) derart angeordnet ist, dass Gas (F4) von der Gasflussumführungsleitungsanordnung (40) wieder mit dem Gas (F5) von der Gastemperaturbehandlungsanordnung (10) in einer Richtung (F4) zusammengeführt wird, die eine Komponente aufweist, vorzugsweise eine Hauptkomponente, die transversal zu einer Hauptflussrichtung (F5) des Gases (F5) von der Gastemperaturbehandlungsanordnung (10) und transversal zu dem Produktpfad (P) ist.

10. Vorrichtung nach einem oder mehreren der Ansprüche 1 bis 9, worin die Vorrichtung für das Kühlen von Produkten (8) in dem Bett (B) von Produkten (8) ausgelegt ist, vorzugsweise für das Kühlen von Lebensmittelprodukten (8), und am bevorzugsten für das Einfrieren von Lebensmittelprodukten (8).

11. Verfahren zur Temperaturbehandlung eines Bettes (B) von Produkten (8), umfassend:
Transportieren des Bettes (B) von Produkten (8) entlang eines Produktpfads (P) in einer Produkttransportanordnung (20),
Zirkulieren von Gas durch das Bett (B) von Produkten (8), während das Bett (B) von Produkten (8) entlang des Produktpfads (P) transportiert wird, durch eine Gaszirkulationsanordnung (30),
Verändern der Temperatur des Gases durch Zirkulieren des Gases durch eine Temperaturbehandlungsanordnung (10),
Zirkulieren eines Flusses (F1) des Gases von unter den Produkten (8) und durch das Bett (B) von Produkten (8) derart, dass ein fluidisiertes Bett (B) von Produkten (8) gebildet wird,
Bereitstellen von zwei aufeinanderfolgend angeordneten Zonen (Z1, Z2) entlang des Produktpfads (P),
Zuordnen beider Zonen (Z1, Z2) zu einer gemeinsamen Gastemperaturbehandlungsanordnung (10) derart, dass durch die gemeinsame Gastemperaturbehandlungsanordnung (10) zirkulierte Gas durch das Bett (B) von Produkten (8) in beiden Zonen (Z1, Z2) zirkuliert wird, und Bereitstellen einer Gasflussumführungsleitungsanordnung (40) an mindestens eine der Zonen (Z1), und
Anordnen der Gasflussumführungsleitungsanordnung (40) derart, dass sie zulässt, dass ein Bruchteil (F3; F4) des Gases um die Gastemperaturbehandlungsanordnung (10) geführt wird und wieder mit Gas (F5), das durch die Gastemperaturbehandlungsanordnung (10) zirkuliert wurde, zusammengeführt wird bevor das Gas durch das Bett (B) von Produkten (8) in der von der Gasflussumführungsleitungsanordnung (40) bereitgestellten Zone (Z1) zirkuliert wird.

12. Verfahren nach Anspruch 11, wobei das Verfahren ferner umfasst Bereitstellen einer Gasflussumführungsleitungsanordnung (40, 40b) an jede der beiden Zonen (Z1, Z2) und Zulassen, dass eine Gasflussumführungsleitungsanordnung (40) von einer der Zonen (Z1) unabhängig von einer Gasflussumführungsleitungsanordnung (40b) der anderen Zone (Z2) betreibbar ist.

13. Verfahren nach Anspruch 11 oder 12, worin das Gas derart fließt, dass das Gas in Aufeinanderfolge durch das Bett (B) von Produkten (8) zirkuliert wird, woraufhin das Gas durch die Gastemperaturbehandlungsanordnung (10) zirkuliert wird und danach das Gas durch die Gaszirkulationsanordnung (30) strömt.

14. Verfahren nach einem oder mehreren der Ansprüche 11 bis 13, worin Gas (F4) von der Gasflussumführungsleitungsanordnung (40) wieder mit dem Gas (F5) von der Gastemperaturbehandlungsanordnung (10) in einer Richtung zusammengeführt wird, die eine Komponente aufweist, vorzugsweise eine Hauptkomponente, die transversal zu einer Hauptflussrichtung (F5) des Gases von der Gastemperaturbehandlungsanordnung (10) ist.

15. Verfahren nach einem oder mehreren der Ansprüche 11 bis 14, worin die Gasflussumführungsleitungsanordnung (40) derart angeordnet ist, dass das Gas von der Gasflussumführungsleitungsanordnung (40) wieder mit dem Gas (F5) von der Gastemperaturbehandlungsanordnung (10) in einer Richtung (F4) zusammengeführt wird, die eine Komponente aufweist, die von der Gaszirkulationsanordnung (30) fort gerichtet ist, und vorzugsweise in eine Richtung (F4), die eine Komponente aufweist, die entlang der Schwerkraft (G) gerichtet ist.

## Revendications

1. Appareil (1) pour un traitement thermique d'un lit (B) de produits (8), l'appareil (1) comprenant :
un dispositif de transport de produits (20) pour transporter ledit lit (B) de produits (8) le long d'un trajet de produits (P) dans ledit appareil (1),
un dispositif de traitement thermique de gaz (10) pour modifier la température d'un gaz mis en circulation à travers le dispositif de traitement thermique de gaz (10),
un dispositif de mise en circulation de gaz (30) pour faire circuler ledit gaz dans ledit appareil (1) à travers ledit dispositif de traitement thermique de gaz (10) et à travers ledit lit (B) de produits (8),
dans lequel le dispositif de mise en circulation de gaz (30) est adapté pour fournir un écoulement (F1) dudit gaz à partir du dessous dudit lit (B) de produits (8) et à travers ledit lit (B) de produits (8) de sorte qu'un lit fluidisé (B) de produits (8) est formé,
dans lequel l'appareil (1) est doté de deux zones (Z1, Z2) disposées successivement le long du trajet de produits (P),
dans lequel ledit dispositif de traitement thermique de gaz (10) est commun aux deux zones (Z1, Z2) et est associé aux deux zones (Z1, Z2) de sorte que du gaz mis en circulation à travers ledit dispositif de traitement thermique de gaz (10) commun est mis en circulation à travers ledit lit (B) de produits (8) dans les deux zones (Z1, Z2), et
dans lequel au moins l'une des zones (Z1) est dotée d'un dispositif de dérivation d'écoulement de gaz (40), et
dans lequel ledit dispositif de dérivation d'écoulement de gaz (40) est adapté pour permettre à une fraction (F3 ; F4) du gaz de contourner le dispositif de traitement thermique de gaz (10) commun et de rejoindre du gaz (F5) ayant été mis en circulation à travers le dispositif de traitement thermique de gaz (10) commun avant la mise en circulation du gaz à travers ledit lit (B) de produits (8) dans ladite zone (Z1) dotée du dispositif de dérivation d'écoulement de gaz (40).

2. Appareil (1) selon la revendication 1, dans lequel chacune desdites deux zones (Z1, Z2) est dotée d'un dispositif de dérivation d'écoulement de gaz (40, 40b), dans lequel un dispositif de dérivation d'écoulement de gaz (40) de l'une des zones (Z1) peut être exploité indépendamment d'un dispositif de dérivation d'écoulement de gaz (40b) de l'autre zone (Z2).

3. Appareil (1) selon la revendication 1 ou 2, dans lequel le gaz est mis en circulation dans un écoulement (F1, F2, F3, F4, F5) ayant une composante principale transversale au trajet de produits (P), est dans lequel le dispositif de traitement thermique de gaz (10) s'étend le long du trajet de produits (P) et est, en projection dans un plan horizontal, positionné à côté du dispositif de transport de produits (20).

4. Appareil (1) selon l'une ou plusieurs des revendications 1-3, dans lequel l'écoulement de gaz (F1, F2, F3, F4, F5) est orienté, et l'appareil (1) est conçu, de manière à ce que le gaz dans l'ordre consécutif soit mis en circulation à travers ledit lit (B) de produits (8), après quoi le gaz est mis en circulation à travers le dispositif de traitement thermique de gaz (10) et après quoi le gaz passe par le dispositif de mise en circulation de gaz (30).

5. Appareil (1) selon l'une ou plusieurs des revendications 1-4, dans lequel le dispositif de dérivation d'écoulement de gaz (40) est étudié de manière à ce que du gaz (F4) dudit dispositif de dérivation de gaz (40) rejoigne le gaz (F5) du dispositif de traitement thermique de gaz (10) dans une direction (F4) ayant une composante orientée en éloignement dudit dispositif de mise en circulation de gaz (30).

6. Appareil (1) selon l'une ou plusieurs des revendications 1-5, dans lequel le dispositif de mise en circulation de gaz (30) est, dans une direction transversale au trajet de produits (P) et en projection dans un plan horizontal, positionné entre le dispositif de transport de produits (20) et le dispositif de traitement thermique de gaz (10).

7. Appareil (1) selon l'une ou plusieurs des revendications 1-6, dans lequel le dispositif de mise en circulation de gaz (30) est, en projection dans un plan vertical, positionné sous le dispositif de traitement thermique de gaz (10) et sous le trajet de produits (P) du dispositif de transport de produits (20).

8. Appareil (1) selon l'une ou plusieurs des revendications 1-7, dans lequel le dispositif de dérivation d'écoulement de gaz (40) est étudié de manière à ce que du gaz (F4) dudit dispositif de dérivation d'écoulement de gaz (40) rejoigne le gaz (F5) du dispositif de traitement thermique de gaz (10) dans une direction (F4) ayant une composante orientée le long de la gravité (G).

9. Appareil (1) selon l'une ou plusieurs des revendications 1-8, dans lequel le dispositif de dérivation d'écoulement de gaz (40) est étudié de manière à ce que du gaz (F4) dudit dispositif de dérivation d'écoulement de gaz (40) rejoigne le gaz (F5) du dispositif de traitement thermique de gaz (10) dans une direction (F4) ayant une composante, de préférence une composante principale, qui est transversale à une direction d'écoulement principale (F5) du gaz (F5) du dispositif de traitement thermique de gaz (10) et transversale au trajet de produits (P).

10. Appareil selon l'une ou plusieurs des revendications 1-9, dans lequel l'appareil est adapté pour la réfrigération de produits (8) dans ledit lit (B) de produits (8), de préférence la réfrigération de produits alimentaires (8) et de manière particulièrement préférée, la congélation de produits alimentaires (8).

11. Procédé de traitement thermique d'un lit (B) de produits (8), comprenant :
le transport dudit lit (B) de produits (8) le long d'un trajet de produits (P) dans un dispositif de transport de produits (20),
la mise en circulation de gaz à travers ledit lit (B) de produits (8), alors que le lit (B) de produits (8) est transporté le long dudit trajet de produits (P), par un dispositif de mise en circulation de gaz (30),
la modification de la température dudit gaz par mise en circulation dudit gaz à travers un dispositif de traitement thermique (10),
la mise en circulation d'un écoulement (F1) dudit gaz à partir du dessous desdits produits (8) et à travers ledit lit (B) de produits (8) de sorte qu'un lit fluidisé (B) de produits (8) est formé,
la fourniture de deux zones (Z1, Z2) disposées successivement le long du trajet de produits (P),
l'association des deux zones (Z1, Z2) à un dispositif de traitement thermique de gaz (10) commun de sorte que du gaz mis en circulation à travers ledit dispositif de traitement thermique de gaz (10) commun est mis en circulation à travers ledit lit (B) de produits (8) dans les deux zones (Z1, Z2), et la fourniture d'un dispositif de dérivation d'écoulement de gaz (40) à l'au moins une des zones (Z1), et
la disposition dudit dispositif de dérivation d'écoulement de gaz (40) de manière à ce qu'il permette à une fraction (F3 ; F4) dudit gaz de contourner le dispositif de traitement thermique de gaz (10) et de rejoindre du gaz (F5) ayant été mis en circulation à travers ledit dispositif de traitement thermique de gaz (10) avant la mise en circulation du gaz à travers ledit lit (B) de produits (8) dans ladite zone (Z1) dotée du dispositif de dérivation d'écoulement de gaz (40).

12. Procédé selon la revendication 11, le procédé comprenant en outre la fourniture, à chacune des deux zones (Z1, Z2), d'un dispositif de dérivation d'écoulement de gaz (40, 40b) et la permission qu'un dispositif de dérivation d'écoulement de gaz (40) de l'une des zones (Z1) soit exploitable indépendamment d'un dispositif de dérivation d'écoulement de gaz (40b) de l'autre zone (Z2).

13. Procédé selon la revendication 11 ou 12, dans lequel le gaz s'écoule de manière à ce que le gaz dans l'ordre consécutif soit mis en circulation à travers ledit lit (B) de produits (8), après quoi le gaz est mis en circulation à travers le dispositif de traitement thermique de gaz (10) et après quoi le gaz passe par le dispositif de mise en circulation de gaz (30).

14. Procédé selon l'une ou plusieurs des revendications 11-13, dans lequel du gaz (F4) dudit dispositif de dérivation d'écoulement de gaz (40) rejoint le gaz (F5) du dispositif de traitement thermique de gaz (10) dans une direction ayant une composante, de préférence une composante principale, qui est transversale à une direction d'écoulement principale (F5) du gaz du dispositif de traitement thermique de gaz (10).

15. Procédé selon l'une ou plusieurs des revendications 11-14, dans lequel le dispositif de dérivation d'écoulement de gaz (40) est disposé de manière à ce que du gaz dudit dispositif de dérivation d'écoulement de gaz (40) rejoigne le gaz (F5) du dispositif de traitement thermique de gaz (10) dans une direction (F4) ayant une composante orientée en éloignement dudit dispositif de mise en circulation de gaz (30), et de préférence dans une direction (F4) ayant une composante orientée le long de la gravité (G).
